Europäisches Patentamt

European Patent Office

Office européen des brevets

(11) Publication number: **0 198 658**
A2

# EUROPEAN PATENT APPLICATION

(21) Application number: 86302619.1

(22) Date of filing: 09.04.86

(51) Int. Cl.⁴: **G 11 B 15/18,** G 11 B 15/02

(30) Priority: 12.04.85 US 722885

(43) Date of publication of application: 22.10.86
Bulletin 86/43

(84) Designated Contracting States: AT CH DE FR GB LI NL

(71) Applicant: AMPEX CORPORATION, 401 Broadway
M.S. 3-35, Redwood City California 94063-3199 (US)

(72) Inventor: O'Gwynn, David C., 11850 N. Windmill Road,
Colorado Springs Colombia (US)

(74) Representative: Horton, Andrew Robert Grant et al,
BOULT, WADE & TENNANT 27 Furnival Street, London,
EC4A 1PQ (GB)

(54) Apparatus and method for remotely controlling the displacement of a movable web.

(57) An apparatus and method for remotely controlling the displacement of video tape on a video tape recorder. An amount, rate and direction of displacement are selected by the rotation of a knob (12). The displacement is differentiated into a series of speed commands in a remote controller (10). The speed commands are transmitted by an asynchronous serial link (40-52) to a video tape recorder (50) where they are used to control the movement of tape on a tape transport.

0198658

## Apparatus And Method For
## Remotely Controlling the Displacement of a Movable Web

This invention relates generally to video tape recorders of the type that have a tape transport for moving video tape. This invention further relates to remotely controlling such a tape transport so as to discretely control the displacement of the video tape.

### BACKGROUND OF INVENTION

Video tape recorders are commonly used to record and playback program materials on a video tape. In a conventional video tape recorder, video tape is fed off a supply reel and through a capstan. The capstan regulates the speed of the tape. After leaving the capstan, the tape is wrapped around a head wheel, where video material is either read, erased and/or recorded on the video tape. After leaving the head wheel, the tape is fed onto a take-up reel.

In operating a professional type of video tape recorder, it is desirable to be able to displace the tape short distances, in relation to the head wheel, in order to locate a particular frame or group of frames. This type of function is referred to as a hand jog. A hand jog allows the operator to control displacement of tape on a video tape recorder. A number of operator input devices, such as slides or touch pads, can be used to control a hand jog. A commonly used operator input device for a hand jog is a rotatable knob.

There are three parameters involved in a hand jog. They are the amount of the displacement, rate of the displacement, and direction of displacement. The displacement is determined by the amount the knob is turned, indicating how far the tape is to be moved. The rate of displacement is determined by the speed at which the knob is turned, indicating how fast the tape is to be moved. The direction of the displacement is determined by the direction the knob is turned, indicating which direction the tape is to be moved.

A hand jog actuated from the video tape recorder control panel can be implemented by using the output of a tachometer, connected to the knob, to directly control the servo systems of the video tape recorder tape transport. In this type of hand jog all, three parameters, displacement, rate of displacement, and direction of displacement, are directly passed to the video tape recorder tape transport.

It is also desirable to be able to remotely control the operation of a video tape recorder. This is especially useful in a broadcast setting, where many video tape recorders, which may be in different locations, must be controlled from a common area.

One method to provide such remotely controlled operation is to extend the all the control signals, including the pulses from the hand jog tachometer, from the control panel to the video tape recorder. This method is generally impractical because of the sheer number of wires necessary to control the video tape recorder. Further, as the distance between the remote control panel and the video tape recorder increases, so does potential signal degredation and interference.

A better method of remotely controlling a video tape recorder is to translate the control signals into transmittable commands. These commands can be transmitted over a standard data transmission system, which is generally immune to signal degredation and interference, to the video tape recorder where they can be translated back into control signals for the video tape recorder. The Society of Motion Picture and Television Engineers (SMPTE) has proposed a standard for the remote control of video tape recorders. This standard will specify the commands that may be issued remotely to a video tape recorder, as well as the type of data transmission system to be used.

In one example of remote controlled operation, an operator selects a function, such as "tape forward", from the remote control panel. That control signal is converted to a command and is transmitted over the data transmission system to the video tape recorder. Upon receiving the command, the video tape recorder translates it back to the control signals necessary to execute the "tape forward" command.

While this method of translating the control signals to commands and back into control signals is adequate for most tape control functions, it cannot be used to directly transmit the signals necessary to implement a hand jog. This is because the signals from the hand jog tachometer, a series of pulses, cannot generally be sent over the same transmission system that is transmitting discrete commands. Further, the SMPTE standard does not provide commands to directly implement a hand jog.

As a result of these problems, there is a need for an apparatus or method that can provide a remotely controlled hand jog. Such an apparatus or method desirably also uses the proposed SMPTE commands.

## SUMMARY OF THE INVENTION

The present invention overcomes the limitations of command driven remote control systems to provide a hand jog feature. Further, the present invention can further be implemented using proposed SMPTE commands.

In the present invention, an operator input device such as a rotatable knob, located on a remote control panel, is connected to a tachometer which generates signals relating to the direction, amount, and rate of displacement of the knob by the operator.

' These signals are fed to a tachometer decoder where they are decoded into a displacement signal and a direction signal. The displacement signal is a series of pulses that defines the amount and rate of displacement of the knob. The direction signal indicates direction of displacement of the knob.

The displacement and direction signals are applied to a counter. The pulses of the displacement signal are counted by the counter. The direction signal controls whether the counter counts up or down. The counter outputs a signed displacement count to a processor, where the sign indicates direction.

The processor clears the counter, waits a measured interval of time, and then reads a displacement count from the counter. The counter is then cleared and the process repeated. The displacement count from the counter is mathematically differentiated by the processor over the measured time interval to produce a speed command that is transmittable over a data transmission system. While the proposed SMPTE standard does not provide for direct hand jog commands, it is expected to have a variable speed command that can be used for this purpose.

The speed command is transmitted over the data transmission system to the video tape recorder where a tape transport controller produces control signals to run the tape transport at the speed specified by the speed command. As a series of these speed commands are used to control the tape transport, an integration is performed which effectively reproduces an amount, rate and direction of displacement of the tape that corresponds to the amount, rate and direction of displacement of the knob by the operator.

Various of the above-mentioned and further features and advantages will be apparent from the specific examples described hereinbelow of an exemplary apparatus and method.

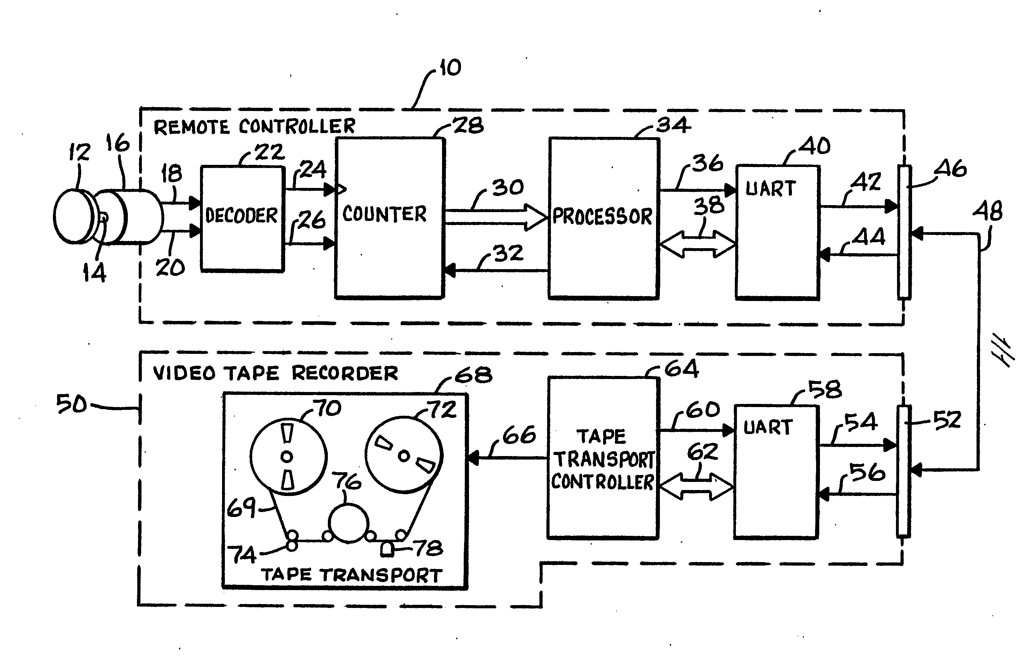

## BRIEF DESCRIPTION OF THE DRAWING

The figure is a schematic representation of circuitry of the present invention.

## DETAILED DESCRIPTION

Referring now to the figure, the following is a description of the interconnection of the elements of the present invention. A knob 12, located on a remote controller 10, is connected to a tachometer 16 by means of a shaft 14. Tachometer 16 outputs two tachometer signals 18 and 19 which are fed to a tachometer decoder 22. When turned, tachometer 16 outputs tachometer signals 18 and 19 that are a series of pulses that relate to the distance turned and the rate turned.

Because the hand jog can work in either direction, it is important to know which direction the knob is turned. The two signals 18 and 20 are in quadrature, which means that they are out of phase by 90$^o$ but otherwise identical. The purpose of this relationship between tachometer signals, 18 and 20, is to allow direction of rotation to be detected. One signal alone would only provide distance and rate. By comparing the phase of the two signals, that is which signal leads the other signal, a direction of rotation of tachometer 16 can also be detected. Tachometer decoder 22 performs this operation. Tachometer decoder 22 can easily be implemented by one skilled in the art. The preferred embodiment is disclosed in U.S. Patent 4,446,389.

From the two tachometer signals 18 and 19 tachometer decoder 22 outputs a displacement signal 24 and direction signal 26 which are fed to a counter 28. Counter 28 can also be implemented by one skilled in the art. The preferred implementation is a standard 74191 integrated circuit supplied by a number of chip producers such as Texas Instruments.

In addition to displacement signal 24 and direction signal 26 from tachometer decoder 22, counter 28 receives a clear signal 32 from a processor 34. Counter 28 outputs a displacement count 30, which is fed to processor 34. The preferred embodiment of processor 34 is the NSC800 microprocessor, but many commercially available microprocessors could be used.

Processor 34 communicates with a Universal Asynchronous Receiver/Transmitter (UART) 40. Processor 34 outputs a UART control signal 36. A UART data signal 38 can be passed in either direction between processor 34 and UART 40. The preferred embodiment of UART 40 is the NSC858 UART, which is matched to the NSC800 microprocessor, but as with processor 34, many commercially available UARTs could be used.

UART 40 outputs a send signal 42 to, and inputs a receive signal 44 from, a driver/sensor 46. Driver/sensor 46 can be implemented, by a person skilled in the art, in a variety of standard data transmission schemes such as the Institute of Electrical and Electronic Engineers (IEEE) RS-232 serial data transmission standard. The preferred method, and the method provided for in the proposed SMPTE standard is the IEEE RS-422 serial data transmission standard.

Driver/sensor 46 sends and receives serial data on a transmission cable 48 to and from, a video tape recorder driver/sensor 52, located in a video tape recorder 50. Video tape recorder 50 could be any video tape recorder such as the Ampex Corporation VPR-3 or VPR-80 Video Tape Recorders. Video tape recorder driver/sensor 52 performs the complementary function of driver/sensor 46. Video tape recorder driver/sensor 52 outputs a receive signal 56 to and inputs a send signal 54 from video tape recorder UART 58, which also performs an corresponding function to UART 40.

Video tape recorder UART 58 additionally receives a UART control signal 60 from a tape transport controller 64. A UART data signal 62 is passed between video tape recorder UART 58 and tape transport controller 64. Tape transport controller 64 can be implemented by a person skilled in the art.

Tape transport controller 64 produces a transport control signal 66 which is fed to a tape transport 68. Tape transport 68, such as the tape transports in the Ampex Corporation VPR-3 or VPR-80 Video Tape Recorders, is common in the video tape recorder industry.

A video tape 69 is located on tape transport 68. Video tape 69 is fed off a supply reel 70 to a capstan 74. From capstan 74, video tape 69 is wrapped around head wheel 76, past audio head 78, and back to a take-up reel 72.

Referring again to the Figure, the following is a functional description of the present invention. Remote controller 10 is used to control the operation of video tape recorder 50. An operator using remote controller 10 can control the operation of video tape recorder 50 from a control panel of remote controller 10. One of the functions selectable by the operator is a hand jog. The hand jog allows the operator to control displacement of video tape 69 on video tape recorder 50. The three parameters involved in a hand jog, amount, rate and direction of displacement, must be passed from remote controller 10 to video tape recorder 50.

To actuate the hand jog, the operator turns knob 12 located on remote controller 10 a selected amount, at a selected rate, and in a selected direction, corresponding to the selected amount, rate and direction of displacement of tape 69 with respect to head wheel 76. As knob 12 is turned, so is tachometer 16, which outputs two tachometer signals 18 and 20 in quadrature.

From the two tachometer signals 18 and 20, tachometer decoder 22 produces displacement signal 24 and direction signal 26. Displacement signal 24 is simply a pulse train derived from the two tachometer signals 18 and 19. Direction signal 24 is derived from the phase comparison of tachometer signals 18 and 19. The displacement signal 24 and direction signal 26 are applied to counter 28.

Counter 28 contains a count register. As a pulse is detected in displacement signal 24, the count register is incremented by one count. The direction of incrementation of the count register is determined by direction signal 26. The count register will be incremented up when the direction signals is in a first mode and the count register will be incremented down when the direction signal is in a second mode. The count register contains a signed number, indicating the direction and amount of rotation of tachometer 16. The third input signal to counter 28 is clear signal 32. When this signal is active, the count register is reset to zero. Clear signal 32 originates at processor 34. The contents of the count register in counter 28 is outputted as displacement count 30 to processor 34.

Processor 34 must produce a variable speed command, that is transmittable, from the displacement count. Mathematically this is accomplished by differentiating the change in distance, that is the amount of change in distance, over the change in time. This is done by clearing the count register in counter 28, waiting a measured amount of time and then reading the displacement count. The count register is then cleared in preparation for the next read. Because the count register is cleared after each reading, the count represents the change in distance from the last read.

The displacement count is multiplied by a system constant to perform the differentiation to produce the desired speed command. This system constant is based on the period of time between reads of the count register in counter 28, the form of the speed command, and the design of tachometer 16.

The speed command must be transmitted from remote controller 10 to video tape recorder 50. There are a number of methods of sending data. For long distances, a convenient method of transmitting data is serially. This is also the method of transmission provided for by the proposed SMPTE standard. In serial transmission, instead of transmitting each word of data at the same time over separate wires for each bit of data, the bits of data in the word to be transmitted are sent one after another.

Data is dealt with by processor 34 as a word at a time; thus it is necessary to convert this data, in this case a speed command, into a serial form. This is the function of UART 40. UART data signal 38 is sent from processor 34 to the UART 40. UART control signal 36 is produced by processor 34 to control UART 40.

After being converted to serial form by UART 40, the speed command is sent as send signal 42 to driver/sensor 46. Driver/sensor 46 converts send signal 42 to the proper voltage and current levels to be sent over transmission cable 48. Video tape recorder driver/sensor 52 receives the speed command sent over transmission cable 48 and converts the data back to voltage and current levels acceptable by video tape recorder UART 58.

Video tape recorder UART 58 converts the serial data into receive signal 56 to words that are sent to tape transport controller 64. Tape transport controller 64 controls video tape recorder UART 58 by means of UART control signal 60. Upon receiving the speed command, tape transport controller 64 sends a confirmation message back to processor 34 by way of UART data signal 62 to video tape recorder UART 58, send signal 54 to video tape recorder driver/sensor 52, transmission cable 48 to driver/sensor 48, receive signal 44 to UART 40, and finally UART data signal 38 to processor 34.

Tape transport controller 64 converts the speed command into appropriate tape transport control signal 66 necessary to move the tape at the speed and in the direction requested by the speed command. The execution of a number of speed commands has the effect of mathematically integrating the speed commands back into the parameters required to perform the hand jog. Each seperate speed command cause a small change in the amount, rate and direction of displacement, which over a series, corresponds to the selected amount, rate and direction of displacement. Because each speed command is executed for a known period of time, each speed command actually specifies an amount of displacement. The sign of the speed command indicates the direction of the displacement. The distance travelled by the tape between two speed command is the amount of displacement. The velocity change between two speed commands is the rate of displacement. Transport control signal 66 controls the movement of supply reel 70, capstan 74 and take-up reel 72 to effect movement of tape 69 on tape transport 68 past head wheel 76 and audio head 78.

The following is an example of the operation of the present invention. Before knob 12 is turned, processor 34 reads a count of zero from counter 28 and produces a speed command of zero that is transmitted to tape transport controller 64 resulting in no movement of tape 69 on tape transport 68. Knob 12 is turned by an operator one inch, at a selected rate, in a clock-wise direction, indicating that the operator wishes the tape 69 to be moved forward, at the selected rate, an amount proportional to one inch past head wheel 76 on tape transport 68. As knob 12 is turned, processor 34 reads and clears counter 28 a number of times. After each read, processor 34 formulates a speed command that is transmitted to tape transport 64 effecting the movement of tape 69 by tape transport 68. At the end of the turning of knob 12 by the operator, processor 34 reads a zero count from counter 28 and sends a zero speed command to tape transport controller 64 stopping the movement of tape 69, after having moved that tape the selected amount, at the selected speed and in the selected direction.

While the above discussion has been in the context of a remote implementation of a hand jog, it is conceivable that the present invention could be implemented entirely inside the video tape recorder. In such an arrangement, the processor could be directly connected to the tape transport controller, or the processor and tape transport controller could be the same element. Further, while the above discussion has been in terms of video tape, it certainly could be applied to any movable web.

While the embodiments disclosed herein are preferred, it will be appreciated that they are merely examples, and that various alternatives, modifications, variations or improvements thereon may be made by those skilled in the art from this teaching, which are intended to be encompassed by the following claims.

CLAIMS

1.   Apparatus for controlling displacement of a movable web, said apparatus comprising: input means (12-16) for producing displacement data related to a selected displacement of said movable web: computing means (22,28,34) responsive to said displacement data for producing speed data: and transport means (50) responsive to said speed data for displacing said movable web (69).

2.   Apparatus according to claim 1, wherein said movable web (69) is video tape and wherein said transport means is a video tape recorder.

3.   Apparatus according to claim 1 or claim 2 in which a remote controller (20) contains said input means (12-16) and said computing means.

4.   Apparatus according to claim 3 wherein said remote controller comprises data sending means (40,46) responsive to said speed data for producing a speed data signal: and the transport means comprises data receiving means (52,58) responsive to said speed data signal for reproducing said speed data.

5.   Apparatus according to claim 3 wherein the data sending means comprises:  parallel-to-serial data means (40) for converting said speed data to a serial speed data signal: and transmission driver means (46) responsive to said serial speed data for producing said speed data signal.

6.   Apparatus according to claim 3 or claim 4, wherein said data receiving means comprises transmission sensor means (52) responsive to said speed data signal for producing a serial speed data; and serial-to-parallel data means (58) for converting said serial speed data to speed data.

7. Apparatus according to any foregoing claim wherein said input means comprises: operator interface means (12) for receiving a displacement motion; and motion encoding means (16) responsive to said displacement motion for producing said displacement data.

8. Apparatus according to claim 6 wherein said input means further comprises linking means (14) for communicating said displacement motion to said motion encoding means.

9. Apparatus according to claim 6 or claim 7, wherein said motion encoding means (16) comprises a tachometer.

10. Apparatus according to any foregoing claim, wherein said computing means (22,28) comprises: counting means responsive to said displacement data for producing displacement count data; and a processor (34) responsive to said displacement count data for producing said speed data.

11. Apparatus according to claim 9, wherein said counting means comprises: decoding means (22) responsive to said displacement data for producing a count signal and a direction signal; and a counter (28) responsive to said direction signal for producing said displacement count data from said count signal.

12. Apparatus according to claim 10, wherein said counter comprises: up/down logic means responsive to said direction signal for producing an up/down signal; and a count register responsive to said count signal and said up/down signal for accumulating said displacement count data.

13. Apparatus according to any of claims 9 to 11, wherein said processor comprises a microprocessor.

14. Apparatus according to any foregoing claim, wherein said transport means comprises: a transport controller (64) responsive to said speed data for producing at least one transport control signal; and a web transport (74) responsive to said transport control signal for displacing said movable web.

15. Apparatus according to claim 13, wherein said web transport comprises a capstan (74).

16. Apparatus for producing a plurality of speed commands corresponding to a selected displacement, said apparatus comprising input means (12,16) for producing displacement data related to said selected displacement; computing means (22,28,34) for repetitively sampling said displacement data over measured intervals of time to producing said plurality of speed commands; and transmission means (40,46) for transmitting said speed commands.

17. Apparatus for remotely controlling displacement of a video tape (69) on a video tape recorder, said apparatus comprising a remote controller (10) including input means (12,16) for producing displacement data related to a selected displacement of said video tape and computing means (22,28,34) responsive to said displacement data for producing speed data; the apparatus further comprising transmission means (40,46) for transmitting said speed data from said computing means to a video tape transport in said recorder.

18. Method for remotely controlling displacement of a video tape on a video tape recorder comprising the ordered steps of: inputting displacement data related to a selected displacement of said video tape; processing said displacement data to produce speed data; transmitting said speed data; and displacing said video tape in response to said speed data.

REMOTE CONTROLLER 10

DECODER 22 → COUNTER 28 → PROCESSOR 34 → UART 40

VIDEO TAPE RECORDER 50

TAPE TRANSPORT 68

TAPE TRANSPORT CONTROLLER 64 → UART 58